# EUROPÄISCHE PATENTSCHRIFT

(11) **EP 1 707 349 B1**
(45) Veröffentlichungstag und Bekanntmachung des Hinweises auf die Patenterteilung: **26.03.2008**
(21) Anmeldenummer: 05027258.2
(22) Anmeldetag: 14.12.2005
(51) Int. Cl.: B32B 5/26, E04B 1/80, B32B 3/04, B32B 21/02, B32B 21/10, B32B 19/06

(54) **Thermisch isolierendes Panel**
Thermally insulating panel
Panneau isolant thermique

(30) Priorität: 31.03.2005 DE 102005014577
(43) Veröffentlichungstag der Anmeldung: 04.10.2006
(73) Patentinhaber: Knauf Insulation GmbH, 9586 Fürnitz (AT)
(72) Erfinder: Mente, Markus, 9587 Riegersdorf (AT); Eusch, Ingram, 9500 Villach (AT)
(74) Vertreter: Becker, Thomas

(56) Entgegenhaltungen:
- EP-A- 1 457 612
- WO-A-03/002828
- WO-A-03/043811
- DE-A1- 10 125 964
- DE-A1- 10 226 188
- ANONYMOUS: "Product data sheet: Tektalan-E-21" INTERNET ARTICLE, [Online] XP002380561 Gefunden im Internet: URL:http://www.skanda-uk.com/PDF/tektalan- e-21.pdf> [gefunden am 2006-05-10]

## Beschreibung

Die Erfindung betrifft ein Verbundelement, insbesondere konfektioniert als Platte, zur Verwendung im Bauwesen, insbesondere im Hoch- und Tiefbau, im Konstruktionsbau (technische Isolierungen) und im Schiffsbau und Flugzeugbau.

Zur Wärme- und/oder Schallisolierung sind unter anderem folgende Produkte bekannt:
Holzwolle-Elemente: Holzwollespäne werden mit einem Bindemittel zu offenporigen Elementen konfektioniert, meist in Plattenform. Sie werden seit über 100 Jahren unter der Marke "Heraklith" vertrieben.
Mineralfaser-Produkte: Die aus Glas- oder Steinfasern bestehenden und meist mit einem Bindemittel versehenen Mineralfaserprodukte lassen sich in beliebigen Formen herstellen. Sie werden zum Beispiel unter der Marke "HERALAN" vertrieben.
Geschäumte Produkte: Hierzu gehören Produkte auf Basis Schaumpolystyrol, die sich ebenfalls in beliebiger Form herstellen und verarbeiten lassen. Sie sind unter der Marke "Styropor" bekannt.

Daneben gibt es Bauelemente, wie Bauplatten, auf Basis anorganischer Bindemittel, Glas oder Metall.

Die verschiedenen Produkte lassen sich teilweise untereinander zu Verbundelementen konfektionieren.

So sind unter der Marke "TEKTALAN" seit Jahren Verbundelemente bekannt, die eine erste Schicht aus Steinwolle (Mineralfasern) und eine zweite Schicht aus Holzwolle (mit einem magnesitischen Bindemittel gebundene Holzwollespäne) aufweisen. Beide Schichten sind miteinander verklebt. Sie werden beispielsweise zur Trittschalldämmung und Wärmeisolation im Dachbereich eingesetzt.

Der Rohdichtebereich für die Mineralwolle-Schicht liegt zwischen 10 und 500 kg/m³, üblicherweise zwischen 20 und 250 kg/m³. Die Rohdichte der Holzwolle-Schicht beträgt üblicherweise zwischen 100 und 500 kg/m³.

Die Wärmeleitfähigkeit λ - bestimmt gemäß ÖNORM B 6015-1 ff - der Produkte ist unter anderem von deren Dichte abhängig, liegt aber größenordnungsmäßig im folgenden Bereich (daraus ergibt sich dann produktspezifisch der jeweilige Wärmedurchgangskoeffizient U(k); siehe auch: Bau Konstruktionslehre 4, Bauphysik, 6. Auflage, Wien 2000, ISBN 3-7068-0302-X).

| | |
|---|---|
| Für Holzwolle-Produkte: U(k): | 0,4 bis 0,9 W/m²K |
| λ: | 0,04 bis 0,2 W/mK |
| | |
| Für Mineralfaser-Produkte: U(k): | 0,15 bis 0,4 W/m²K |
| λ: | 0,03 bis 0,05 W/mK |

Für Verbundelemente aus einer beispielsweise 25 mm dicken Holzwolle-Deckschicht und einer 100 bis 200 mm dicken Mineralwolle-Schicht beträgt der Wärmedurchlasswiderstand Rₜ (bestimmt nach EN 12667) größenordnungsmäßig 2 bis 5 m²K/W.

Aus der DE 101 25 964 A1 ist ein Formkörper bekannt, der mindestens eine verformbare, poröse Schicht in einer gasdiffussionsdichten Umhüllung aufweist, wobei ein in der Schicht vorhandenes Porenvolumen zumindest teilweise evakuiert ist. Dabei kann der Formkörper aus Mineralfasern oder Holzfasern bestehen. Die Umhüllung besteht beispielsweise aus einer Folie.

Die DE 102 26 188 A1 zeigt ein Verbundelement mit einer evakuierten Schicht und einer darauf konfektionierten Putzträgerplatte.

Gemäß WO 03/002828 A1 werden Schichten mit unterschiedlichem Evakuierungsgrad verbunden.

Die WO 03/043811 A1 weist auf eine Fasermatte hin, die von einer Hülle umgeben wird.

In der EP 1 457 612 A1 werden Einheiten beschrieben, die aus mehreren Glasfasermatten bestehen, die in einer gemeinsamen Umhüllung verpackt sind.

Der Erfindung liegt die Aufgabe zugrunde, ein Verbundelement für den genannten Einsatzzweck anzubieten, welches gute thermische Isoliereigenschaften bei einfacher Montagemöglichkeit aufweist.

Die Erfindung macht von einem zumindest teilweise evakuierten Formkörper Gebrauch, indem mindestens eine Schicht innerhalb eines erfindungsgemäßen Verbundelementes analog ausgebildet wird. Mindestens eine weitere Schicht des Verbundelementes ist eine nicht-evakuierte Schutzschicht, die gegen die Umhüllung der evakuierten, porösen Schicht anliegt. Ferner ist die zumindest teilevakuierte Schicht aus Teilstücken gebildet, zwischen denen eine schlecht wärmeleitende Füllschicht angeordnet ist.

Gase, speziell Luft, besitzen eine höhere Wärmeleitfähigkeit (und damit schlechtere Wärmedämmeigenschaften) als Vakuum. Das teilweise evakuierte Produkt beziehungsweise die teilweise evakuierte Schicht innerhalb des Verbundelementes schafft durch die zumindest teilweise Evakuierung die Möglichkeit, die thermischen Isoliereigenschaften deutlich zu verbessern. Je nach Grad der Evakuierung lässt sich die Wärmeleitfähigkeit auf 0,001 W/mK oder weniger reduzieren. In Abhängigkeit von der (ursprünglichen) Dichte der entsprechenden Schicht und/oder in Abhängigkeit vom Grad der Evakuierung besitzt die Schicht entweder im Wesentlichen das gleiche Volumen wie die ursprüngliche (nicht evakuierte) Schicht (wobei jedoch zumindest ein Teil der Luft entfernt und damit eine zumindest teilweise Evakuierung eingestellt ist) oder das Volumen der zumindest teilweise evakuierten Schicht ist kleiner als das Volumen der ursprünglichen Schicht (aufgrund der Evakuierungsbehandlung).

In dem zuerst genannten Fall ergibt sich bei im Wesentlichen unveränderter Form (Außenmaß) der Schicht eine verbesserte thermische Isolierung aufgrund der Evakuierung. Im zweiten Fall lässt sich eine nochmals gesteigerte Isolierwirkung feststellen.

Die Schutzschicht hat mehrere Funktionen: Sie schützt die gegen mechanische Einwirkungen empfindliche evakuierte Schicht. Sie erhöht gleichzeitig die Wärmedämmwirkung des Verbundelementes, wenn sie selbst thermisch isolierend ist (wie eine Mineralwolle- oder Holzwolle-Schicht). Sie kann die Elastizität des Verbundelementes insgesamt erhöhen. Sie kann auch zur Befestigung des Verbundelementes an Wänden, Decken, Fassaden besser genutzt werden als die empfindliche evakuierte Schicht.

Die Schicht A besteht beispielsweise aus Mineralfasern, Mineralwolle, geblähtem Perlit, Vermiculit, Blähglas oder dergleichen. Nachstehend schließt der Begriff Mineralfaserschicht A auch alle anderen offenporigen Materialien ein. Die Schicht A kann nach Art einer Platte, gekantet oder gewölbt gestaltet sein. Sie kann plane oder profilierte Oberflächen aufweisen. Sie ist in jedem Fall mindestens teilevakuiert.

Die Schutzschicht ist vorzugsweise selbst wärmeleitend. Sie kann aus Mineralwolle oder Holzwolle bestehen. Sie ist in der Regel offenporig und nicht evakuiert.

Die Mineralwolle-Schutzschicht entspricht als solche dem Stand der Technik. Sie kann prinzipiell eine beliebige Dichte und Dicke aufweisen.

Eine offenporige Holzwolleschicht kann ebenfalls gemäß Stand der Technik ausgebildet sein. Sie besteht beispielsweise aus 2 bis 10 cm langen, 0,2 bis 0,8 cm breiten und 0,1 bis 1 mm dicken Holzspänen, die mit einem Bindemittel (z.B. Zement oder magnesitisches Bindemittel) zu einem offenporigen Holzspänegerüst verformt sind.

Die (teil)evakuierte Schicht A soll aus Teilstücken bestehen. Diese Teilstücke können in der Aufsicht eine Rechteckform, eine quadratische Form, eine Dreieckform, aber auch jede andere Form aufweisen. Die Teilstücke können unmittelbar aneinander liegen. Die Teilstücke können auch mit Abstand zueinander angeordnet werden. Dabei können die Zwischenräume zwischen benachbarten Teilstücken mit Dämmmaterial, beispielsweise konventionellem Mineralfaser-Material ausgefüllt sein. Beispielsweise kann die Mineralfaser-Schutzschicht B (ohne Umhüllung), die eine teilevakuierte Schicht A bedeckt, unter- beziehungsweise oberseitig mit vorspringenden Stegen ausgebildet sein, die die erwähnten Räume zwischen benachbarten Teilstücken der Schicht A ausfüllen.

Während die vorgenannten Maßnahmen überwiegend der Verbesserung der Wärmeisolation dienen kann die mechanische Festigkeit des genannten Verbundelementes dadurch erhöht werden, indem mindestens eine Mineralfaserschicht eine überwiegende Faserorientierung senkrecht zu den Hauptoberflächen der Mineralfaserschicht aufweist. Entsprechende Mineralfaserschichten können beispielsweise durch bekannte, so genannte "Lamellenplatten" bereitgestellt werden.

Das genannte Verbundelement lässt sich in vielseitiger Weise konstruktiv verändern:

So können mindestens 2 offenporige Holzwolleschichten vorgesehen werden, die untereinander keinen Flächenkontakt haben. Mit anderen Worten: Die Holzwolleschichten bilden beispielsweise die größeren Deckschichten (obere und untere Deckschicht).

Die mindestens eine Mineralfaser-Schutzschicht kann die evakuierte Schicht A (mit Umhüllung) zumindest auf ihren beiden Hauptoberflächen bedecken. Als "Hauptoberflächen" werden zum Beispiel bei einem plattenförmigen Körper die beiden großen Oberflächen bezeichnet. Analog gilt dies zum Beispiel für Verbundelemente, die in Form von Rohrschalen oder Rohrhalbschalen gestaltet sind.

Daraus folgt für die zuletzt genannte Ausführungsform beispielsweise folgender Schichtaufbau für eine Verbundplatte (von oben nach unten):
- optional: obere Holzwolle-Deckschicht
- Mineralfaserschicht ohne Umhüllung
- Mineralfaserschicht teilevakuiert
- Mineralfaserschicht ohne Umhüllung
- optional: untere Holzwolle-Deckschicht.

Die Mineralfaser-Schutzschicht B (ohne Umhüllung) kann die evakuierte Schicht A (mit Umhüllung) auch allseitig umgeben, also bei Plattenform beispielsweise auch an den 4 Schmalseiten zwischen den Hauptoberflächen.

Die konkrete Dimensionierung der einzelnen Schichten beziehungsweise des Verbundelementes hängt vom konkreten Anwendungsfall ab. Neben dem eingangs erwähnten Zwei-Schicht-Element kann das Verbundelement drei- oder mehrschichtig sein. Nachstehend werden beispielhafte Kombinationen einzelner Schichten genannt, wobei HW für eine Holzwolleschicht, MF/A für eine mindestens teilweise evakuierte Mineralfaserschicht und MF/B für eine Mineralfaserschicht konventioneller Art steht, wobei der Einfachheit halber der Aufbau jeweils anhand einer Platte und von oben nach unten betrachtet, dargestellt wird:
Beispiel 1: HW-MF/A-HW
Beispiel 2: HW-MF/A-MF/B
Beispiel 3: MF/B-MF/A-MF/B
Beispiel 4: HW-MF/B-MF/A-MF/B-MF/A-MF/B-HW

Die Dicke der einzelnen Schichten variiert je nach Anwendungsfall und beträgt üblicherweise zwischen 1 und 10 cm, sodass sich Gesamtdicken des Verbundelementes in der Größenordnung zwischen 2 und 25 cm ergeben.

Die einzelnen Schichten werden beispielsweise miteinander verklebt, mindestens partiell. Zur Verklebung kann das Bindemittel benutzt werden, mit dem die Holzwolle-Späne der Holzwolleschicht verbunden werden. Dies kann beispielsweise ein Bindemittel auf Basis MgO-Kauster sein.

Ebenso können die Schichten aber auch über konventionlle Kleber, beispielsweise Dispersions-, Wasserglas- oder PU-Kleber verbunden werden.

Es liegt im Rahmen der Erfindung, insbesondere die Deckschichten optisch zu gestalten, um sie direkt als Sichtflächen auszubilden. Schon aus diesem Grunde empfiehlt es sich, die erwähnten Holzwolle-Schichten als Deckschichten auszubilden. Durch Auswahl der Holzwollefasern (Holzwollespäne), insbesondere ihrer Größe und Verdichtung innerhalb der Holzwolleschicht können das optische Aussehen, aber auch die thermischen und mechanischen Eigenschaften eingestellt werden.

Darüber hinaus können weitere Oberflächengestaltungen erfolgen. Beispielweise kann die Oberfläche (der äußeren Deckschicht) mit einem Vlies, beispielsweise einem Glasfaservlies, abgedeckt werden.

Darüber hinaus kann das Verbundelement mechanische Einrichtungen zur Montage aufweisen. So können die einzelnen Verbundschichten unter Ausbildung von Falzen versetzt zueinander angeordnet werden. Es können Vertiefungen und/oder Vorsprünge ausgebildet werden, die der Verankerung benachbarter Elemente oder der Befestigung an Wänden, Decken oder dergleichen dienen. Zu diesem Zweck können auch Anker, Stifte oder dergleichen in das Verbundelement integriert oder an diesem befestigt werden.

Hierin liegt ein großer Vorteil der neuen Verbundelemente. Die bekannten evakuierten Dämmelemente sind empfindlich und nur schwer zu montieren. Erfindungsgemäße Verbundelemente lassen sich beispielsweise über die Mineralwolle-/Holzwolle-Schichten leicht montieren (verkleben, verdübeln, verstiften etc.).

Die Erfindung wird nachstehend anhand verschiedener Ausführungsbeispiele näher erläutert. Dabei zeigen - jeweils in stark schematisierter - Darstellung (also nicht maßstäblich):
- Figur 1:: Einen Vertikalschnitt durch eine erste Ausführungsform einer Verbundplatte
- Figur 2a:: Eine Aufsicht auf eine zweite Ausführungsform einer Verbundplatte
- Figur 2b:: Einen Vertikalschnitt durch die Verbundplatte gemäß Figur 2a

In den Figuren sind gleiche oder gleich wirkende Bauteile mit gleichen Bezugsziffern dargestellt.

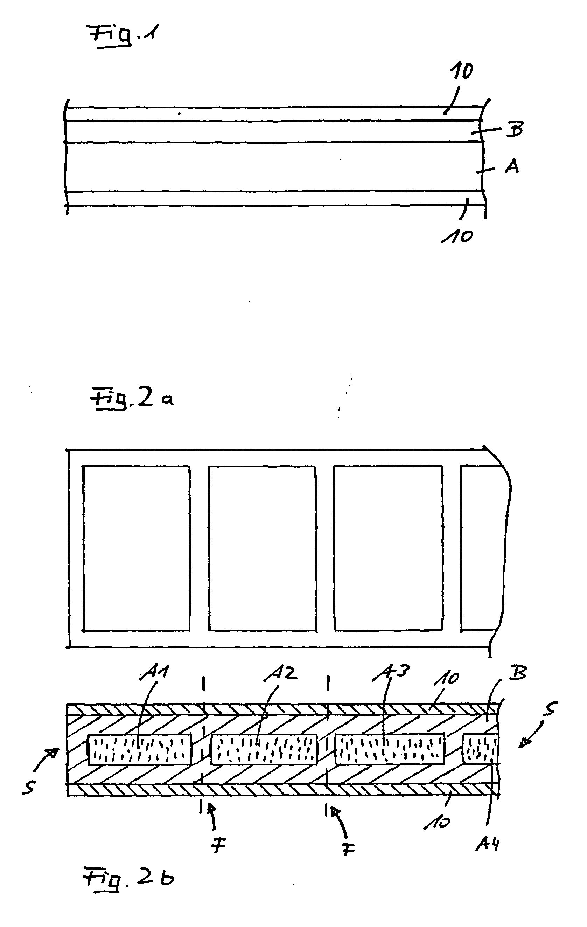

Der Aufbau der Verbundplatte gemäß Figur 1 ist (von oben nach unten) wie folgt:

Holzwolle-Deckschicht 10 - Mineralwolle-Schicht B (ohne Umhüllung) - Mineralwolleschicht A in einer gasdiffusionsdichten Folienumhüllung, teilevakuiert - Holzwolle-Deckschicht 10. Die einzelnen Schichten sind miteinander verklebt. Die Gesamtdicke der Verbundplatte beträgt 30 mm. Die Schicht A weist eine Wärmeleitfähigkeit λ von 0,002 W/mK auf. Für die Mineralwolleschicht B beträgt der Wert 0,040 W/mK, für die Holzwolle-Deckschichten 10 liegt der Wert bei 0,15 W/mK.

Der Wärmedurchlasswiderstand Rₜ des Gesamt-Verbundelementes gemäß Figur 1 liegt bei circa 8 m²K/W.

Im Ausführungsbeispiel nach den Figuren 2a, b wird das Verbundelement wieder ober- und unterseitig von Holzwolle-Deckschichten 10 abgedeckt. Die evakuierte Mineralfaserschicht ist in mehrere Teilstücke A1, A2, A3, A4, etc. aufgeteilt. Die Teilstücke A1..A4, die jeweils in einer Folienhülle konfektioniert sind, werden allseitig von der Mineralfaserschicht B bedeckt und damit eingeschlossen. Die Mineralfaserschicht B verläuft entsprechend auch zwischen benachbarten evakuierten Zonen A1...A4, wie aus der Schnittansicht nach Figur 2b zu erkennen ist.

Unter Zugrundelegung der Wärmeleitfähigkeiten gemäß dem Ausführungsbeispiel zu Figur 1 und einer Gesamtstärke des Verbundelementes gemäß Figuren 2a, b von 70 mm berechnet sich hier ein Wärmedurchlasswiderstand Rₜ von circa 25 m²K/W.

Zwischen benachbarten Teilstücken A1...A4 der evakuierten Mineralfaserschicht kann das Verbundelement Fixierungspunkte aufweisen, die zusätzliche Stabilität schaffen und die empfindlichen evakuierten Bereiche nicht berühren. Die Fixierung (in Fig. 2b schematisch als gestrichelte Linie dargstellt) kann wie folgt realisiert werden: Wird das Verbundelement zur Wärmedämmung an einer Wand einsetzt, kann die Platte an den markierten Stellen (F) mit Dübeln, Nägeln, Ankern, Stiften, Klammern oder dergleichen an der Wand befestigt werden, ohne die evakuierten Teilstücke A1...A4 zu verletzen.

Stirnseitig (bei S) kann die Platte eine Stufe aufweisen, sodass sie sich ohne durchlaufende Fuge an eine korrespondierend ausgebildete weitere Platte anschließen lässt.

Folgende Vergleiche verdeutlichen die Vorteile eines erfindungsgemäßen Verbundelementes:

### A1: Verbundelement gemäß Erfindung:

| Aufbau: | |
|---|---|
| obere Deckschicht: | 5 mm dicke Holzwolle-Leichtbauplatte |
| mittlere Schicht: | 40 mm dicke Schicht, gebildet aus nebeneinander liegenden Streifen von teilevakuierter Mineralwolle in einer gasdiffusionsdichten Hülle und konventionellen Mineralwollestreifen (Rohdichte: 125 kg/m³) jeweils 50 cm breit. |
| untere Deckschicht: | wie obere Deckschicht |

Der Wärmedurchlasswiderstand belegt: 16,3 m²K/W

### B1: Vergleichsplatte

| | |
|---|---|
| obere Deckschicht: | wie A1 |
| mittlere Schicht: | 40 mm dicke Schicht aus konventioneller Mineralwolle mit einer Rohdichte von 125 kg/m³ |
| untere Schicht: | wie A1 |

Der Wärmedurchlasswiderstand ist 1,1 m²K/W.

### A2: Verbundelement gemäß Erfindung

| | |
|---|---|
| obere Deckschicht: | 30 mm dicke konventionelle Mineralfaserschicht mit einer Rohdichte von 125 kg/m³ |
| mittlere Schicht: | wie A1 |
| untere Deckschicht: | wie obere Deckschicht |

### Der Wärmedurchlasswiderstand entspricht: 17,7 m²K/W

### B2: Vergleichsplatte

Standard-Mineralfaserplatte von 100 mm Dicke in einer Rohdichte von 125 kg/m³.

Der Wärmedurchlasswiderstand beträgt: 2,5 m²K/W.

## Patentansprüche

1. Verbundelement mit mindestens folgenden Schichten:
a) mindestens einer porösen Schicht (A) in einer gasdiffusionsdichten Umhüllung, wobei ein in der Schicht (A) vorhandenes Porenvolumen zumindest teilweise evakuiert ist,
b) mindestens einer, gegen die Umhüllung der porösen Schicht (A) anliegenden nicht-evakuierten Schutzschicht (B, 10), **dadurch gekennzeichnet, dass**
c) die Schicht (A) aus Teilstücken (A1, A2, A3, A4) besteht, zwischen denen eine schlecht wärmeleitende Füllschicht angeordnet ist.

2. Verbundelement nach Anspruch 1, dessen Schutzschicht (B) eine Mineralfaserschicht ist.

3. Verbundelement nach Anspruch 1, dessen Schutzschicht (10) eine Holzwolleschicht ist.

4. Verbundelement nach Anspruch 1 mit mindestens zwei offenporigen Holzwolleschichten (10), die keinen Flächenkontakt miteinander haben.

5. Verbundelement nach Anspruch 1 mit zwei Schutzschichten, die die Schicht (A) mindestens auf beiden Hauptoberflächen bedecken.

6. Verbundelement nach Anspruch 1, bei dem die Schutzschicht (B) die Schicht (A) allseitig bedeckt.

7. Verbundelement nach Anspruch 1, bei dem benachbarte Schichten (B, A; A, 10; B, 10) zumindest partiell miteinander verklebt sind.

8. Verbundelement nach Anspruch 8, bei dem die Füllschicht aus dem gleichen Material wie mindestens eine der Schutzschichten (B, 10) besteht.

9. Verbundelement nach Anspruch 2, bei dem mindestens eine Mineralfaserschicht eine überwiegende Faserorientierung senkrecht zu den Hauptoberflächen der Mineralfaserschicht aufweist.

10. Verbundelement nach Anspruch 1 mit mindestens folgendem Schichtaufbau zwischen einer ersten und einer zweiten Hauptoberfläche:
- Mineralfaserschicht (B)
- Schicht (A) mit gasdiffusionsdichter Umhüllung
- Mineralfaserschicht (B)
- mindestens einer Holzwolleschicht (10) benachbart der ersten oder zweiten Hauptoberfläche

11. Verbundelement nach Anspruch 1 mit mindestens folgendem Schichtaufbau zwischen einer ersten und einer zweiten Hauptoberfläche:
- Mineralfaserschicht (B)
- Schicht (A) aus Teilstücken (A1, A2, A3, A4) mit gasdiffusionsdichter Umhüllung, zwischen denen Teilstücke einer Mineralfaserschicht verlaufen,
- Mineralfaserschicht (B)
- mindestens einer Holzwolleschicht (10) benachbart der ersten oder zweiten Hauptoberfläche

12. Verbundelement nach Anspruch 1, bei dem mindestens eine zwischen äußeren Schichten (10) verlaufende Schicht (A) eine Wärmeleitfähigkeit aufweist, die mindestens zehnmal kleiner ist als die mindestens einer außen benachbarten Schicht (B, 10).

13. Verbundelement nach Anspruch 1, mit einem Wärmedurchlasswiderstand > 10 m²K/W.

## Claims

1. Composite element comprising at least the following layers:
a) at least one porous layer (A) in an outer envelope sealed against gas diffusion, a pore volume present in the layer (A) being at least partially evacuated,
b) at least one non-evacuated protective layer (B, 10) resting against the outer envelope of the porous layer (A), **characterized in that**
c) the layer (A) comprises partial elements (A1, A2, A3, A4) between which a filler layer with poor thermal conductivity is arranged.

2. Composite element according to Claim 1, of which the protective layer (B) is a mineral fibre layer.

3. Composite element according to Claim 1, of which the protective layer (10) is a wood wool layer.

4. Composite element according to Claim 1, comprising at least two open-pored wood wool layers (10), which have no surface contact with one another.

5. Composite element according to Claim 1, comprising two protective layers which cover the layer (A) on at least both main surfaces.

6. Composite element according to Claim 1, in which the protective layer (B) covers the layer (A) on all sides.

7. Composite element according to Claim 1, in-which adjacent layers (B, A; A, 10; B, 10) are at least partially bonded to one another.

8. Composite element according to Claim 8, in which the filler layer consists of the same material as at least one of the protective layers (B, 10).

9. Composite element according to Claim 2, in which at least one mineral fibre layer has a fibre orientation which is substantially perpendicular to the main surfaces of the mineral fibre layer.

10. Composite element according to Claim 1, comprising at least the following layer structure between a first and a second main surface:
- mineral fibre layer (B)
- layer (A) with an envelope sealed against gas diffusion
- mineral fibre layer (B)
- at least one wood wool layer (10) adjacent to the first or second main surface

11. Composite element according to Claim 1, comprising at least the following layer structure between a first and a second main surface:
- mineral fibre layer (B)
- layer (A) made of partial elements (A1, A2, A3, A4) with an envelope sealed against gas diffusion, between which partial elements of a mineral fibre layer extend,
- mineral fibre layer (B),
- at least one wood wool layer (10) adjacent to the first or second main surface

12. Composite element according to Claim 1, in which at least one layer (A) extending between external layers (10), has a thermal conductivity which is at least ten times lower than the thermal conductivity of at least one external adjacent layer (B, 10).

13. Composite element according to Claim 1, with a thermal resistance of > 10 m² K/W.

## Revendications

1. Elément composite avec au moins les couches suivantes:
a) au moins une couche poreuse (A) dans une enveloppe étanche à la diffusion gazeuse, dans lequel un volume poreux présent dans la couche (A) est mis sous vide au moins partiellement,
b) au moins une couche protectrice (B, 10) non mise sous vide, adjacente à l'enveloppe de la couche poreuse (A), **caractérisé en ce que**
c) la couche (A) est constituée de segments (A1, A2, A3, A4) entre lesquels est placée une couche de remplissage avec une mauvaise conductivité thermique.

2. Elément composite selon la revendication 1, dont la couche protectrice (B) est une couche de fibres minérales.

3. Elément composite selon la revendication 1, dont la couche protectrice (10) est une couche de laine de bois.

4. Elément composite selon la revendication 1, avec au moins deux couches de laine de bois à pores ouverts (10) qui n'ont aucun contact superficiel l'une avec l'autre.

5. Elément composite selon la revendication 1, avec deux couches protectrices qui recouvrent la couche (A) au moins sur les deux surfaces principales.

6. Elément composite selon la revendication 1, dans lequel la couche protectrice recouvre la couche (A) de tous les côtés.

7. Elément composite selon la revendication 1, dans lequel des couches adjacentes (B, A ; A, 10 ; B, 10) sont collées les unes aux autres au moins partiellement.

8. Elément composite selon la revendication 8, dans lequel la couche de remplissage est constituée de la même matière qu'au moins l'une des couches protectrices (B, 10).

9. Elément composite selon la revendication 2, dans lequel au moins une couche de fibres minérales présente une orientation prédominante des fibres perpendiculaire aux surfaces principales de la couche de fibres minérales.

10. Elément composite selon la revendication 1, avec au moins la structure en couches suivante entre une première et une deuxième surface principale :
- couche de fibres minérales (B)
- couche (A) avec une enveloppe étanche à la diffusion gazeuse
- couche de fibres minérales (B)
- au moins une couche de laine de bois (10) adjacente à la première ou à la deuxième surface principale.

11. Elément composite selon la revendication 1, avec au moins la structure en couches suivante entre une première et une deuxième surface principale :
- couche de fibres minérales (B)
- couche (A) constituée de segments (A1, A2, A3, A4) avec une enveloppe étanche à la diffusion gazeuse entre lesquels s'étendent des segments d'une couche de fibres minérales
- couche de fibres minérales (B)
- au moins une couche de laine de bois (10) adjacente à la première ou à la deuxième surface principale.

12. Elément composite selon la revendication 1, dans lequel au moins une couche (A) s'étendant entre des couches extérieures (10) présente une conductivité thermique qui est au moins dix fois inférieure à celle d'au moins une couche extérieure adjacente (B,10).

13. Elément composite selon la revendication 1, avec une résistance au passage de la chaleur > 10 m²K/W.
